# EUROPÄISCHE PATENTSCHRIFT

(11) **EP 3 081 329 B1**
(45) Veröffentlichungstag und Bekanntmachung des Hinweises auf die Patenterteilung: **25.07.2018**
(21) Anmeldenummer: 16164990.0
(22) Anmeldetag: 13.04.2016
(51) Int. Cl.: B23Q 1/00

(54) **SPANNMODUL UND SPANNSYSTEM, INSBESONDERE NULLPUNKTSPANNSYSTEM**
CLAMPING MODULE AND CLAMPING SYSTEM IN PARTICULAR ZERO POINT CLAMPING SYSTEM
MODULE DE SERRAGE ET SYSTEME DE SERRAGE, EN PARTICULIER SYSTEME DE SERRAGE AU POINT ZERO

(30) Priorität: 14.04.2015 DE 102015206590
(43) Veröffentlichungstag der Anmeldung: 19.10.2016
(73) Patentinhaber: Schunk GmbH & Co. KG Spann- und Greiftechnik, 74348 Lauffen am Neckar (DE)
(72) Erfinder: KOCH, Alexander, 88512 Mengen (DE); EBE, Frank, 88499 Riedlingen (DE)
(74) Vertreter: DREISS Patentanwälte PartG mbB

(56) Entgegenhaltungen:
- EP-A2- 1 886 751
- WO-A1-2014/009201

## Beschreibung

Die Erfindung betrifft ein Spannmodul, insbesondere ein Ausgleichsmodul, mit einer Spannaufnahme zur Aufnahme eines Spannbolzens eines Spannsystems, insbesondere eines Nullpunktspannsystems, und mit wenigstens einem Verriegelungselement, das in radialer Richtung derart in eine Verriegelungslage verlagerbar ist, dass es in einer radial inneren Lage gegen einen in der Spannaufnahme angeordneten Spannbolzen wirkt, wobei ein insbesondere axial verlagerbarer Kolben vorgesehen ist, der mit dem Verriegelungselement mittels einer Mechanik derart bewegungsgekoppelt ist, dass eine insbesondere axiale Verlagerung des Kolbens eine radiale Verlagerung des Verriegelungselements bewirkt.

Die Spannbolzen und die Spannaufnahmen sind dabei derart angeordnet, dass die einzelnen Spannbolzen in die ihnen jeweils zugeordneten Spannaufnahmen einführbar sind, und dort mittels der Verriegelungselemente in einer Verriegelungslage verriegelbar sind.

Bei Nullpunktspannsystemen handelt es sich um Spannsysteme, mit denen zu bearbeitende Werkstücke wiederholbar positionsgenau gespannt werden können. Entweder können dabei die Werkstücke als solche die Spannbolzen aufweisen oder es ist denkbar, dass die zu bearbeitenden Werkstücke auf Spannplatten angeordnet sind, die dann wiederum Spannbolzen aufweisen. Die einzelnen Spannmodule sind dabei vorzugsweise auf einem gemeinsamen Träger, beispielsweise auf einem Tisch oder einer Platte angeordnet.

Die Erfindung betrifft außerdem die Ausgestaltung eines Spannsystems, insbesondere eines Nullpunktspannsystems.

Spannsysteme beziehungsweise Spannmodule und zugehörige Spannbolzen sind insbesondere aus der DE 10 2010 007 924 A1 oder der DE 10 2010 013 912 A1 vorbekannt. Die Spannbolzen sind hier als Einzugsspannbolzen ausgebildet, die einen konusflächigen Angriffsabschnitt aufweisen, gegen die Verriegelungselemente derart wirken, dass der Bolzen beim Verriegeln in die Spannaufnahme der Spannmodule eingezogen wird. Zur Bearbeitung von größeren Werkstücken, wie beispielsweise von Zylinderblöcken von Verbrennungsmotoren, werden in der Regel mehr als drei Spannbolzen verwendet, die dann in den jeweiligen Spannmodulen verriegelt werden.

Beim Spannen eines Werkstücks oder einer Spannplatte mit mehr als drei Spannmodulen, insbesondere mit mehr als drei Nullpunktspannmodulen, die jeweils nur ein radial und axial exakt positionsgenaues Spannen eines Spannbolzens in der Spannaufnahme des Spannmoduls ermöglichen, entsteht regelmäßig auf Grund von Fertigungstoleranzen oder thermischen Ausdehnungen des Werkstücks eine mechanische Überbestimmung, was zu mechanischen Spannungen im Werkstück beziehungsweise im gesamten Spannsystem führen kann.

Dabei ist bei der Bearbeitung von größeren Werkstücken oder der Anordnung von größeren Werkstücken an größeren Aufspannplatten eine thermische Ausdehnung besonders problematisch. Eine Erwärmung des Werkstücks kann insbesondere auf Grund einer entsprechenden spanenden Bearbeitung erfolgen. Die thermische Ausdehnung kann dabei im 1/10 bis 1/1 Millimeterbereich liegen. Dies kann zur Folge haben, dass insbesondere unter Verwendung von mehr als drei Nullpunkspannmodulen und mehr als drei Spannbolzen die Spannbolzen dann nicht zentrisch in die Spannaufnahmen der Spannmodule einführbar sind. Bereits bei der Verwendung von lediglich zwei Spannmodulen kann ein Klemmen auftreten, wenn der Ausgleich am Spannbolzen oder Spannbolzen, welcher in der Regel einen Ausgleich von 0,1 mm zulässt, nicht ausreicht. Neben einem Höhenversatz kann folglich auch ein Radialversatz auftreten, der zu einer mechanischen Überbestimmung führt, wodurch mechanische Spannungen im Werkstück oder der Spannplatte hervorgerufen werden.

Aus der DE 20 2009 006 429 U1 ist es beispielsweise in diesem Zusammenhang bekannt, eine Höhenanpassung mittels entsprechend hohen Ausgleichsadaptern zu ermöglichen. Die EP 2 353 774 B1 schlägt vor, einen Höhenausgleich an der Spannvorrichtung vorzusehen.

Ferner zeigt die DE 10 2013 201 310 A1 eine alternative Lösung des Problems, indem sie ein Nullpunktspannsystem bereitstellt, das neben drei Einheitsspannbolzen einen zusätzlichen Ausgleichsspannbolzen umfasst, wobei dieser Ausgleichsspannbolzen einen Ausgleich in radialer und axialer Richtung ermöglicht und somit zum Ausgleich von Höhenversatz und Radialversatz geeignet ist.

Es hat sich jedoch gezeigt, dass der Einsatz von derartigen Ausgleichsbolzen nicht immer erwünscht ist.

Ein Spannmodul mit Merkmalen des Oberbegriffs des Patentanspruchs 1 ist aus der WO 2014/009201 A1 bekannt.

Der vorliegenden Erfindung liegt die Aufgabe zur Grunde, ein eingangs genanntes Spannmodul für ein Spannsystem, insbesondere ein Nullpunktspannsystem bereitzustellen, wobei bei dem Nullpunktspannsystem mehrere einheitliche oder identische Spannbolzen in ihnen jeweils zugeordneten, mehreren Spannmodulen spannbar sein sollen, wobei eine mechanische Überbestimmung vermieden werden soll. Das Spannsystem soll dabei einerseits einfach aufgebaut sein und wenig Bauraum beanspruchen, sowie andererseits sicher funktionieren.

Diese Aufgabe wird mit einem Spannmodul mit den Merkmalen des Anspruchs 1 gelöst.

Ein derartiges Spannmodul zeichnet sich dadurch aus, dass der Grundkörper und der Ausgleichskörper axial spielfrei miteinander verbunden sind. Somit kann eine durch Druckbeaufschlagung des zwischen Grundkörper und Zylinderraum angeordneten Druckraums hervorgerufene Axialbewegung des Grundkörpers auf den Ausgleichskörper derart übertragen werden, dass eine simultane oder nahezu simlutane Bewegung des Kolbens, der den Grundkörper und den Ausgleichskörper umfasst, in axialer Richtung erfolgen kann. Der Grundkörper und der Ausgleichskörper sind dabei bajonettartig miteinander verbunden sind. Durch eine bajonettartige Verbindung des Grundkörpers und des Ausgleichskörpers kann in einfacher Art und Weise ermöglicht werden, durch Einführen des Ausgleichskörpers und anschließendes Verdrehen in dafür vorgesehene Hintergriffsabschnitte den Grundkörper mit dem Ausgleichskörper einerseits weitgehend axial spielfrei miteinander zu verbinden und andererseits eine einfache Montage zu ermöglichen.

Folglich kann in vorteilhafter Weise mit einem derartigen Spannmodul ein Radialversatz in einem Nullpunktspannsystem ausgeglichen werden, welches mehr als drei Spannmodule aufweist, wobei drei Spannmodule als Nullpunktspannmodule ausgebildet sind.

Eine erste vorteilhafte Weiterbildung des Spannmoduls sieht vor, dass der Ausgleichskörper derart beweglich am Grundkörper angeordnet ist, dass eine Mittellängsachse des Ausgleichskörpers relativ zu einer Mittellängsachse des Grundkörpers insbesondere parallel verschiebbar ist. Eine parallele Verschiebbarkeit ist vorteilhaft, da dann ein radialer Versatz zwischen einem Spannbolzens und dem Spannmodul, der in einem Nullpunktspannsystem mit mehreren Spannmodulen auftreten kann, einfach ausgeglichen werden kann.

Eine weitere vorteilhafte Ausgestaltung des Spannmoduls sieht vor, dass der Grundkörper konzentrisch zu einer Mittellängsachse des Spannmoduls im Spannmodul geführt ist. Da der Ausgleichskörper die Mechanik für die Bewegungskopplung des Verriegelungselements mit dem Kolben aufweist und ein Spannen eines Spannbolzens durch das wenigstens eine Verriegelungselement durch radiales Verlagern des wenigstens einen Verriegelungselements hin zu einer Mittellängsachse des Ausgleichskörpers erfolgt und wiederum der Ausgleichskörper mit Achsversatz der Mittellängsachsen gegenüber dem Grundkörper verlagerbar ist, kann auch bei statisch überbestimmten Nullpunktspannsystemen gewährleistet werden, dass auf den im Spannmodul angeordneten und gespannten Spannbolzen eine radiale Spannkraft wirken kann, wobei ein Achsversatz, insbesondere ein Radialversatz zwischen Spannmodul und Spannbolzen ausgeglichen werden kann.

Besonders bevorzugt ist es ferner, wenn das wenigstens eine Verriegelungselement eine Kontaktfläche zum Spannen des Spannbolzens aufweist, die derart ausgebildet ist, dass ein Spannbolzen beim Verlagern des wenigstens einen Verriegelungselements in die Verriegelungslage nicht in die Spannaufnahme eingezogen wird.
Besonders bevorzugt ist es dabei ferner, wenn die Kontaktfläche des wenigstens einen Verriegelungselements derart ausgebildet ist, dass die Kontaktfläche gegen einen zylindrischen Abschnitt des Spannbolzens wirkt. Wenn in einem Spannsystem, insbesondere in einem Nullpunktspannsystem einheitliche Spannbolzen zum Einsatz kommen, sind die Spannbolzen in der Regel derart ausgebildet, dass sie Schrägflächen aufweisen, welche in einem Nullpunktspannmodul mit damit korrespondierenden Schrägflächen der Verriegelungselemente derart zusammenwirken, dass ein Niederzug des Spannbolzens in die Spannaufnahme eines Nullpunktspannmoduls erfolgt. Die Verriegelungselemente können jedoch auch als Kugeln ausgebildet sein. Wenn die Kontaktfläche des Verriegelungselements jedoch lediglich gegen einen zylindrischen Abschnitt des Spannbolzens wirkt, kann ein Niederzug in die Spannaufnahme vermieden werden, da keine Schrägflächen des Spannbolzens so kontaktiert werden, dass eine Radialbewegung des Verriegelungselements in eine Axialbewegung des Spannbolzens umgesetzt wird.

Es ist jedoch auch denkbar, dass die Verriegelungselemente eine zylindrische, konvexe oder konkave Kontaktfläche aufweisen, die senkrecht zur Bewegungsrichtung der Verriegelungselemente ausgebildet ist, so dass kein Niederzug des Spannbolzens in die Spannaufnahme erfolgt.

Eine weitere vorteilhafte Ausgestaltung des Spannmoduls sieht vor, dass das Spannmodul einen Zylinderraum aufweist, in dem der Kolben angeordnet ist, wobei der Grundkörper und der Zylinderraum einen mit Druckluft oder mit einem Hydraulikmedium beaufschlagbaren Druckraum begrenzen. Dazu kann insbesondere vorgesehen sein, dass am Grundkörper beziehungsweise im Zylinderraum Dichtelemente derart angeordnet sind, dass eine Druckabdichtung des Druckraums zwischen Grundkörper und Zylinderraum ermöglicht ist.

Da der Druckraum zwischen Grundkörper und Zylinderraum ausgebildet ist, steht der Ausgleichskörper vorteilhafterweise nicht mit dem Druckraum, welcher mit Druckluft oder mit einem Hydraulikmedium beaufschlagbar ist, in Kontakt. Dies ist von Vorteil, da es ermöglicht, den Ausgleichskörper, der die Mechanik aufweist, radial beweglich beziehungsweise verschiebbar am Grundkörper anzuordnen, wobei gleichzeitig eine Verlagerung des Kolbens in axialer Richtung durch Druckbeaufschlagung des Druckraums zwischen Grundkörper und Zylinderraum ermöglicht werden kann.

Vorteilhafterweise ist die Mechanik, mittels derer das Verriegelungselement mit dem Kolben beziehungsweise dem Ausgleichskörper bewegungsgekoppelt ist, so ausgebildet, dass sie eine Axialbewegung des Ausgleichskörpers in eine Radialbewegung des wenigstens einen Verriegelungselements umsetzt.

Besonders bevorzugt ist es dabei, wenn die Mechanik eine Kulissenführung oder ein Keilhakengetriebe ist. Es ist jedoch auch denkbar, eine andere Art von Schrägfläche vorzusehen, die es ermöglicht, eine Axialbewegung des Ausgleichskörpers in eine Radialbewegung des wenigstens einen Verriegelungselements umzusetzen.

In einer weiteren vorteilhaften Ausgestaltung des Spannmoduls ist vorgesehen, dass ein radial und axial flexibles Dichtelement vorgesehen ist, dass an einer Außenseite der Spannaufnahme angeordnet ist. Mittels eines derartigen Dichtelements kann in einem Nullpunktspannsystem an einem Spannmodul eine Abdichtung auch bei auftretendem Axial- und Radialversatz ermöglicht werden.

Die eingangs genannte Aufgabe wird auch gelöst durch ein Spannsystem, insbesondere ein Nullpunktspannsystem mit den Merkmalen des Anspruchs 12.

Ein solches Spannsystem weist wenigstens ein oder mehrere, jeweils wenigstens ein verlagerbares Verriegelungselement aufweisende Nullpunktspannmodule und wenigstens zwei oder mehrere an einem Werkstück anordenbare, in die Nullpunktspannmodule einführbare Spannbolzen auf, wobei die Spannbolzen in den Nullpunktspannmodulen mittels der Verriegelungselemente in einer Verriegelungslage verriegelbar sind und zeichnet sich dadurch aus, dass wenigstens ein Spannmodul nach einem der Ansprüche 1 bis 11 vorgesehen ist. Folglich kann mit einem derartigen Spannsystem, das einerseits Nullpunktspannmodule aufweist, die einen Spannbolzen immer zu einem definierten Nullpunkt spannen, das heißt zu einem definierten Punkt in axialer und radialer Richtung, ermöglicht werden, mittels der erfindungsgemäßen Spannmodule einen Axial- oder Radialversatz auszugleichen.

Dies ist besonders vorteilhaft, wenn das Spannsystem drei Nullpunktspannmodule aufweist und somit bereits statisch voll bestimmt ist.
Besonders bevorzugt ist es dabei ferner, wenn die Spannbolzen einheitlich ausgebildet sind.

Vorteilhafterweise sind höchstens drei Nullpunktspannmodule vorgesehen. Bei Vorsehen von drei Nullpunktspannmodulen ist das Spannsystem folglich in einer Z-Ebene statisch voll bestimmt. Wenn mehr als drei Spannmodule notwendig sind, da beispielsweise ein größeres Werkstück wie beispielsweise ein Zylinderblock aufgespannt werden muss, ist es folglich besonders vorteilhaft, wenn die übrigen Spannmodule als Ausgleichsmodule gemäß der Ansprüche 1 bis 11 ausgebildet sind, so dass ein Axial- und Radialversatz, welcher beispielsweise durch thermische Ausdehnungen hervorgerufen werden kann, ausgeglichen werden kann.

Weitere Einzelheiten und vorteilhafte Ausgestaltungen der Erfindung sind der nachfolgenden Beschreibung zu entnehmen, anhand derer eine Ausführungsform der Erfindung näher beschrieben und erläutert ist. Es zeigen:
- Figur 1: eine Schrägansicht eines Werkstücks zum Aufspannen mittels eines Nullpunktspannsystems gemäß dem Stand der Technik von unten;
- Figur 2: einen Ausschnitt einer Schrägansicht eines Werkstücks von unten zur Aufspannung mittels eines erfindungsgemäßen Nullpunktspannsystems;
- Figur 3: eine Schrägansicht von oben auf ein mittels eines erfindungsgemäßen Nullpunktspannsystems aufgespanntes Werkstück;
- Figur 4: eine Schnittdarstellung durch ein erfindungsgemäßes Spannmodul mit daran ohne Radialversatz angeordnetem Spannbolzen;
- Figur 5: einen Kolben des Spannmoduls gemäß Figur 4 mit daran angeordnetem Spannbolzen und Verriegelungselementen; und
- Figur 6: das Spannmodul gemäß Figur 4 im Schnitt mit daran mit Radialversatz angeordnetem Spannbolzen.

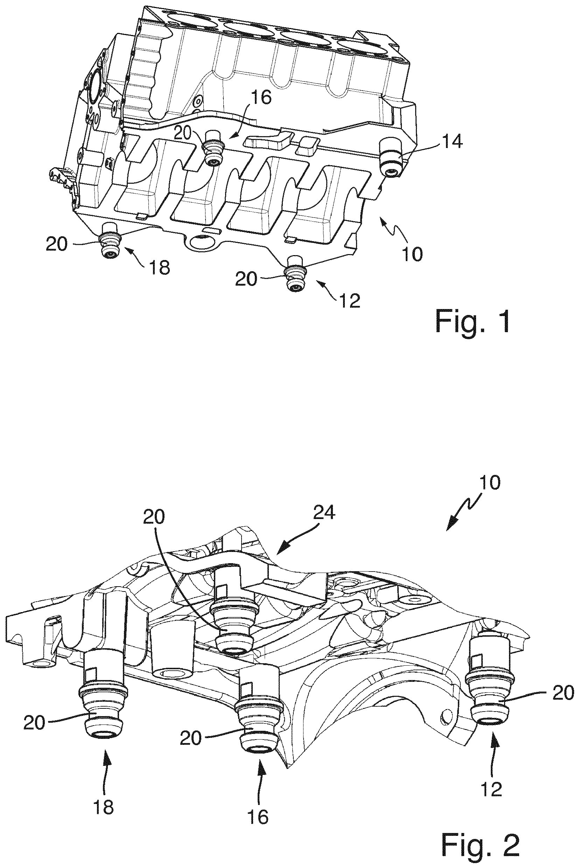

In der Figur 1 ist ein Werkstück 10 in Form eines Zylinderblockes gezeigt, an dem insgesamt vier Spannbolzen 12, 14, 16, 18 zum positionsgenauen Spannen des Werkstücks 10 vorgesehen sind.

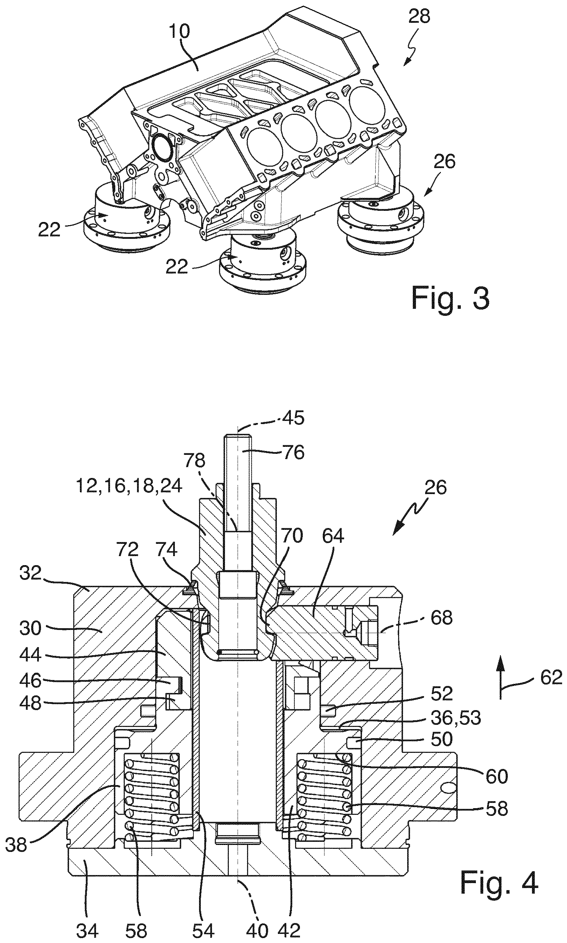

Dazu weisen die drei Spannbolzen 12, 16, 18 eine umlaufende Verriegelungsnut 20 auf. Das in Figur 1 gezeigte Werkstück 10 weist ferner einen aus dem Stand der Technik bekannten Spannbolzen 14 auf. Wenn nun das Werkstück 10 mittels der Spannbolzen 12, 14, 16, 18 an einem in Figur 1 nicht dargestellten, jedoch in Figur 3 erkennbaren Spannmodul 22 aufgespannt werden soll, sind bestimmte Voraussetzungen zu erfüllen. Die in Figur 3 dargestellten Spannmodule 22 sind auf einem nicht dargestellten Grundmodul, insbesondere einer Grundplatte angeordnet. Die Grundplatte mit den Spannmodulen 22 bildet dann im vorliegenden Fall der Figuren 1 bis 3 eine 4-fach Spannstation, in der insgesamt vier Spannmodule vorgesehen sind.

Zurückkommend auf Figur 1 ist es dabei aus dem Stand der Technik wie beispielsweise aus der DE 10 2013 201 310 A1 bekannt, vier gleichartige, sogenannte ABC-Spannmodule 22 vorzusehen, wobei die einzelnen Spannmodule 22 Verriegelungselemente aufweisen, die insbesondere in radialer Richtung aus einer Entriegelungslage in eine Verriegelungslage verlagerbar sind. In der radial äußeren Entriegelungslage ist es dabei möglich, die Spannbolzen 12, 14, 16 und 18 in die Spannaufnahmen der Spannmodule einzuführen beziehungsweise aus den Spannaufnahmen herauszuführen. In der Verriegelungslage wirken die Verriegelungselemente mit den Spannbolzen 12, 14, 16, 18 beziehungsweise deren Verriegelungsnut 20 zusammen. Die ABC-Spannmodule 22 erlauben eine Positionierung (A), eine Indexierung (B) sowie einen axialen Einzug (C) des Spannbolzens 12, 14, 16, 18.

Die Spannbolzen 12, 16, 18 sind dabei in der DE 10 2013 201 310 A1 derart ausgebildet, dass sie im Zusammenspiel mit den Verriegelungselementen in die Spannaufnahmen eingezogen werden. Dies kann insbesondere durch eine Anfasung im Bereich der Nutschenkel der Verriegelungsnut 20 der Spannbolzen 12, 16, 18 beziehungsweise durch eine entsprechende Ausbildung der mit den Spannbolzen 12, 16, 18 zusammenwirkenden Verriegelungselemente erreicht werden. Die in Figur 1 als Einzugsspannbolzen ausgebildeten Spannbolzen 12, 16, 18 sind beispielsweise aus der DE 10 2010 013 912 A1 bekannt.

Wenn nun zum Aufspannen des Werkstücks 10 mittels der Einzugsspannbolzen 12, 16, 18 an einem aus dem Stand der Technik bekannten Spannmodul 22, wie es auch in Figur 3 gezeigt ist, das insbesondere als Nullpunktspannmodul ausgebildet ist, drei Spannbolzen 12, 16, 18 vorgesehen sind, werden diese Spannbolzen 12, 16, 18 von den Verriegelungselementen der Spannmodule 22 in der Verriegelungslage an eine radial und axial definierte Position (Nullpunkt) gezogen. Folglich ist beim Vorsehen von drei Spannbolzen 12, 16, 18, welche in drei Spannmodule 22 eingezogen werden sollen, das aus dem Stand der Technik bekannte Spannsystem statisch voll bestimmt.

Um eine statische Überbestimmung vermeiden zu können und um beispielsweise thermische Ausdehnungen ausgleichen zu können, ist es dabei aus dem Stand der Technik der DE 10 2013 201 310 A1 bekannt, den Spannbolzen 14 als Ausgleichsspannbolzen auszubilden. Dazu weist der Spannbolzen 14 ein Halteelement mit einer Außenoberfläche zur Anlage der Verriegelungselemente auf, das derart ausgebildet ist, dass der Spannbolzen 14 beim Verlagern des Verriegelungselements der Spannmodule 22 in die Verriegelungslage nicht in die Spannaufnahme eingezogen wird. Insbesondere weist der Spannbolzen 14 hierzu eine zylindrische Außenoberfläche auf. Ferner ist der aus der DE 10 2013 201 310 A1 bekannte Spannbolzen 14 in radialer Richtung nachgiebig ausgebildet, so dass beispielsweise durch thermische Ausdehnung hervorgerufener Radialversatz ebenfalls ausgeglichen werden kann.

Figur 2 zeigt ebenfalls die Aufspannung eines Werkstücks 10, wobei zur Aufspannung des Werkstücks 10 insgesamt vier als Einzugsspannbolzen ausgebildete Spannbolzen 12, 16, 18, 24 vorgesehen sind, die alle identisch ausgebildet sind und jeweils eine umlaufende Verriegelungsnut 22 aufweisen.

Figur 3 zeigt dabei das Werkstück 10 gemäß Figur 2 mit daran angeordneten Spannbolzen 12, 16, 18, 24 bei der Aufspannung mittels dreier als Nullpunktspannmodule ausgebildeter Spannmodule 22 und mittels eines erfindungsgemäßen als Ausgleichsmodul ausgebildeten Spannmoduls 26.

In Figur 3 sind insgesamt drei Spannmodule 22 und ein Spannmodul 26 auf einer nicht dargestellten Spannplatte angeordnet. Das Werkstück 10 ist, wie in Figur 2 deutlich zu erkennen ist, mit einheitlich oder identisch ausgebildeten Spannbolzen 12, 16, 18, 24 verbunden. Die als Nullpunktspannmodule ausgebildeten Spannmodule 22, das als Ausgleichsmodul ausgebildete Spannmodul 26 sowie die am Werkstück 10 angeordneten Spannbolzen 12, 16, 18, 24 bilden ein erfindungsgemäßes als Nullpunktspannsystem ausgebildetes Spannsystem 28.

Da das Spannsystem 28 ebenfalls drei als Nullpunktspannmodule ausgebildete Spannmodule 22 aufweist, ist es ebenfalls in Z-Richtung statisch voll bestimmt. Ein Ausgleich von Axial- und Radialversatz, welcher beispielsweise auf Grund thermischer Ausdehnungen auftreten kann, erfolgt nicht wie in der DE 10 2013 201 301 A1 mittels eines in Figur 1 dargestellten als Ausgleichsspannbolzen ausgebildeten Spannbolzens 14.

Vielmehr erfolgt der Ausgleich von Axial- und Radialversatz durch das als Ausgleichsmodul ausgebildete Spannmodul 26.

In den Figuren 4 bis 6 ist ein solches erfindungsgemäßes Spannmodul 26 dargestellt.

Figur 4 zeigt das Spannmodul 26 im Schnitt mit daran angeordnetem, als Einzugsspannbolzen ausgebildetem Spannbolzen 12, 16, 18, 24 ohne Axial- oder Radialversatz.

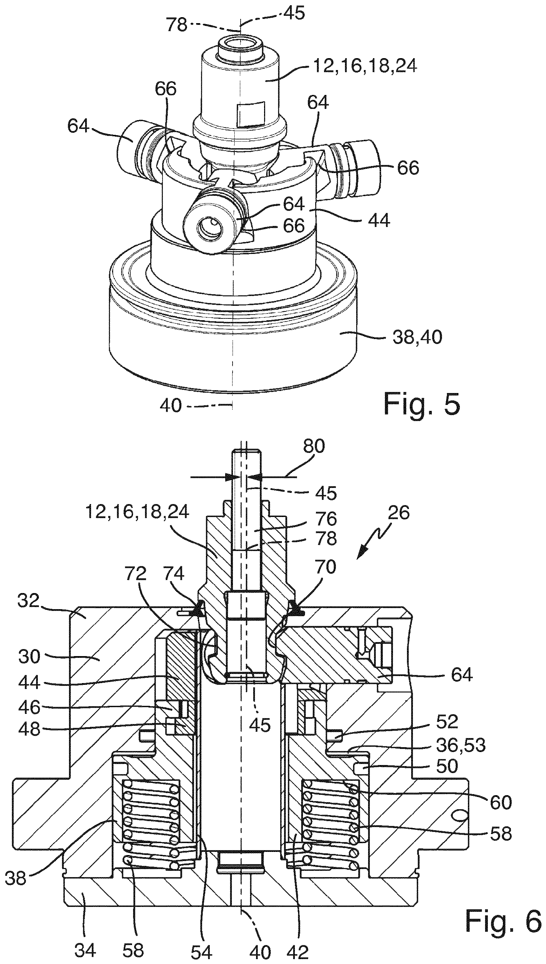

Figur 6 zeigt das Spannmodul 26 mit daran angeordnetem, als Einzugsspannbolzen ausgebildetem Spannbolzen 12, 16, 18, 24 mit Radialversatz.

Zurückkommend auf Figur 4 wird das erfindungsgemäße Spannmodul 26 nun näher beschrieben und erläutert.

Das Spannmodul 26 weist ein Gehäuse 30 auf, das ein Gehäuseoberteil 32 und ein Gehäuseunterteil 34 umfasst. Das Gehäuseoberteil 32 und das Gehäuseunterteil 34 schließen einen Zylinderraum 36 ein, in dem ein Kolben 38 entlang einer Mittellängsachse 40 des Spannmoduls 26 verfahrbar angeordnet ist. Der Kolben 38 weist einen Grundkörper 42 auf, dessen Mittellängsachse 40 mit der Mittellängsachse 40 des Gehäuses 30 identisch ist, da der Grundkörper 42 im Zylinderraum 36 geführt ist. Ferner weist der Kolben 38 einen Ausgleichskörper 44 mit einer Mittellängsachse 45 auf.

Dieser Ausgleichskörper 44 ist mit dem Grundkörper 42 in axialer Richtung, d.h. in Richtung der Mittellängsachse 40 des Grundkörpers 42 verbunden. Zur Verbindung weisen der Grundkörper 42 und der Ausgleichskörper 44 miteinander korrespondierende Hintergriffsabschnitte 46, 48 auf. Der Hintergriffsabschnitt 46 ist am Grundkörper 42 angeordnet, wobei der Hintergriffsabschnitt 48 am Ausgleichskörper 44 angeordnet ist. Eine Verbindung von Grundkörper 42 und Ausgleichskörper 44 kann beispielsweise erfolgen, indem der Ausgleichskörper 44 bajonettartig in eine Aussparung (ohne Bezugszeichen) des Grundkörpers 42 eingeführt wird und anschließend so verdreht wird, dass die Hintergriffsabschnitte 46, 48 sich überlagern. Der Grundkörper 42 und der Ausgleichskörper 44 sind dann in axialer Richtung spielfrei oder nahezu spielfrei miteinander verbunden, so dass eine Bewegung des Grundkörpers 42 in axialer Richtung zu einer simultanen oder nahezu simultanen Bewegung des Ausgleichskörpers 44 führt.

Im Inneren des Kolbens 38, bzw. im Inneren des Grundkörpers 42 und des Ausgleichskörpers 44 ist eine Hülse 54 angeordnet, die konzentrisch zur Mittellängsachse 40 des Grundkörpers 42 ausgerichtet ist und eine innere Begrenzung für den Ausgleichskörper 44 bereitstellt.
Zwischen dem Zylinderraum 36 und dem Grundkörper 42 ist ein Druckraum 53 ausgebildet, der mit Druckluft oder Hydrauliköl mittels eines nicht dargestellten Druckluft- oder Hydraulikanschlusses beaufschlagbar ist, wobei der Druckraum 53 mittels Dichtungen 50, 52 abgedichtet ist.

Auf der dem Druckraum 53 abgewandten Seite des Grundkörpers 42 sind Schraubenfedern 58 angeordnet, die sich einerseits an einer Ringnut 60 des Grundkörpers 52 und andererseits am Gehäuseunterteil 34 abstützen. Die Schraubenfedern 58 beaufschlagen den Grundkörper 42 nach oben, d.h. in Richtung des Pfeils 62 bzw. in Richtung des Druckraums 48.

Der Kolben 38 bzw. der Ausgleichskörper 44 ist, wie in Figur 5 deutlich zu erkennen ist, mit insgesamt drei als Spannschieber ausgebildeten Verriegelungselementen 64 mittels einer Mechanik 66 bewegungsgekoppelt. Die Mechanik 66 ist im vorliegenden Fall als Schrägzug oder Kulissenführung ausgebildet, die jeweils eine Schrägfläche am Ausgleichskörper 44 und am Verriegelungselement 64 aufweist, die derart ausgebildet ist, dass eine Bewegung des Ausgleichskörpers 44 in axialer Richtung, d.h. in Richtung seiner Mittellängsachse 45 eine radiale Bewegung der Verriegelungselemente 64 in Richtung einer Bewegungsachse 68 bewirkt, die senkrecht zur Mittellängsachse 45 des Ausgleichskörpers 44 angeordnet ist.

In Figur 4 sind das Spannmodul 26 bzw. der Kolben 38 und die Verriegelungselemente 64 in einer Verriegelungslage gezeigt. In der Verriegelungslage ist der Kolben 38 von den Federn 58 nach oben beaufschlagt und der Druckraum 53 ist drucklos. Die Verriegelungselemente 64 spannen den in der Spannaufnahme des Spannmoduls angeordneten Spannbolzen 12, 16, 18, 24 radial zentrisch zur Mittellängsachse 45 des Ausgleichskörpers 44, wobei die Mittellängsachse 45 des Ausgleichskörpers 44 konzentrisch zur Mittellängsachse 40 des Grundkörpers 42 angeordnet ist.

Zur Verlagerung des Kolbens 38 und der Verriegelungselemente 64 in eine nicht dargestellte Freigabelage wird der Druckraum 53 mit Druckluft oder Hydrauliköl beaufschlagt, bis die resultierende Kraft die Federkraft der Schraubenfedern 58 übersteigt und der Kolben 38 sich entgegen der durch den Pfeil 62 dargestellten Richtung nach unten bewegt. Aufgrund der Bewegungskopplung zwischen Grundkörper 42 und Ausgleichskörper 44 einerseits, die eine simultane Axialbewegung von Grundkörper 42 und Ausgleichskörper 44 bewirkt, und der Bewegungskopplung zwischen Ausgleichskörper 44 und den Verriegelungselementen 64 mittels der Mechanik 66, bewirkt eine Axialbewegung des Grundkörpers 42 nach unten, die durch Druckbeaufschlagung des Druckraums 53 hervorgerufen wird, eine Radialbewegung der Verriegelungselemente 64 nach radial außen. In der Freigabelage kann der Spannbolzen 12, 16, 18, 24 aus der Spannaufnahme des Spannmoduls 26 entnommen werden.

Die Verriegelungselemente 64 weisen eine Kontaktfläche 70 zum Spannen des Spannbolzens 12, 16, 18, 24 auf, die derart ausgebildet ist, dass der Spannbolzen 12, 16, 18, 24 beim Verlagern der Verriegelungselemente 64 nicht in die Spannaufnahme des Spannmoduls 26 eingezogen wird. Vielmehr ist die Kontaktfläche 70 derart ausgebildet, dass die lediglich gegen einen zylindrischen Abschnitt 72 der Verriegelungsnut 20 des Spannbolzens 12, 16, 18, 24 wirkt, so dass eine radiale Verlagerung der Verriegelungselemente 64 keinen axialen Niederzug des Spannbolzens 12, 16, 18, 24 bewirkt.

An einer Außenseite der Spannaufnahme ist ein als umlaufende Dichtlippe ausgebildetes Dichtelement 74 angeordnet, das radial und axial flexibel ausgebildet ist und das Spannmodul 26 bzw. das Innere der Spannaufnahme vor Verschmutzungen schützt.

Das erfindungsgemäße Spannmodul 26 bzw. das erfindungsgemäße als Nullpunktspannsystem ausgebildete Spannsystem 28 funktioniert wie folgt:
Wenn ein in Figur 3 gezeigtes Werkstück 10 mit einheitlichen oder identischen Spannbolzen 12, 16, 18, 24 mittels der in Figur 4 und 6 gezeigten Schrauben 76 verbunden ist, werden die Spannbolzen 12, 16, 18 in dafür vorgesehene Spannaufnahmen von den in Figur 3 gezeigten Nullpunktspannmodulen 22 eingeführt und dort zu einem axial und radial festgelegten Punkt (Nullpunkt) gespannt. Aufgrund der Größe des Werkstücks 10 erfolgt darüber hinaus ein Spannen des Werkstücks 10 mittels des Spannbolzens 24, welcher in eine Spannaufnahme des erfindungsgemäßen und in den Figuren 4 und 6 im Schnitt gezeigten Ausgleichs- oder Spannmoduls 26 eingeführt wird.

Aufgrund der Verspannung der Spannbolzen 12, 16, 18 in den Nullpunktspannmodulen 22 ist das als Nullpunktspannsystem ausgeführte Spannsystem 28 in Z-Ebene bereits statisch voll bestimmt.

Der vierte Spannbolzen 14 ist jedoch, wie in den Figuren 4 und 6 gezeigt, in der Spannaufnahme des als Ausgleichsmodul ausgebildeten Spannmoduls 26 eingeführt und dort, wie in Figur 4 gezeigt, gespannt. Dabei ist in Figur 4 der Fall gezeigt, bei dem keinerlei Axial- oder Radialversatz zwischen einer Mittellängsachse 78 der Spannbolzens 12, 16, 18, 24 und der Mittellängsachse 40 des Spannmoduls 26 auftritt.

Im Falle von thermischem Verzug aufgrund einer lokalen Erwärmung, die beispielsweise durch ein spanendes Bearbeitungsverfahren hervorgerufen sein kann, kommt es dann, wie in Figur 6 deutlich zu erkennen ist, am Spannbolzen 12, 16, 18, 24 zu einem Radialversatz 80 der Mittellängsachse 78 des Spannbolzens 12, 16, 18, 24 und der Mittellängsachse 40 des Spannmoduls 26 bzw. des Grundkörpers 42 des Kolbens 38.

Dieser Radialversatz 80 kann durch die radiale Beweglichkeit des Ausgleichskörpers 44 gegenüber dem Grundkörper 42 ausgeglichen werden, wobei die Verriegelungselemente 64 den in der Spannaufnahme des Spannmoduls 26 angeordneten Spannbolzen 12, 16, 18, 24 radial zentrisch zur Mittellängsachse 45 des Ausgleichskörpers 44 spannen.

Somit kann mit einem erfindungsgemäßen Spannmodul 26 ein Radialversatz 80 in einem erfindungsgemäßen Spannsystem 28 ausgeglichen werden. Ferner kann aufgrund der Ausbildung der Kontaktfläche 70, die lediglich gegen einen zylindrischen Abschnitt 72 der Verriegelungsnut 20 des Spannbolzens 12, 16, 18, 24 wirkt, erreicht werden, dass eine radiale Verlagerung der Verriegelungselemente 64 keinen axialen Niederzug des Spannbolzens 12, 16, 18, 24 bewirkt, so dass mittels des Spannmoduls 26 auch ein Axialversatz ausgeglichen werden kann.

## Patentansprüche

1. Spannmodul(26), insbesondere Ausgleichsmodul, mit einer Spannaufnahme zur Aufnahme eines Spannbolzens (12, 14, 16, 18, 24), eines Spannsystems, insbesondere eines Nullpunktspannsystems (28), und mit wenigstens einem Verriegelungselement (64), das in radialer Richtung derart in eine Verriegelungslage verlagerbar ist, dass es in einer radial inneren Lage gegen einen in der Spannaufnahme angeordneten Spannbolzen (12, 14, 16, 18, 24) wirkt, wobei ein verlagerbarer Kolben (38) vorgesehen ist, der mit dem Verriegelungselement (64) mittels einer Mechanik (66) derart bewegungsgekoppelt ist, dass eine Verlagerung des Kolbens (38) eine radiale Verlagerung des Verriegelungselements (64) bewirkt, wobei der Kolben (38) einen Grundkörper (42) und einen Ausgleichkörper (44) aufweist, der die Mechanik (66) für die Bewegungskopplung aufweist und der in radialer Richtung derart beweglich am Grundkörper (42) angeordnet ist, dass das wenigstens eine Verriegelungselement (64) den Spannbolzen (12, 16, 18, 24) in der Verriegelungslage radial zwangsfrei in der Spannaufnahme spannt, **dadurch gekennzeichnet, dass** der Grundkörper (42) und der Ausgleichskörper (44) derart bajonettartig miteinander verbunden sind, dass der Grundkörper (42) und der Ausgleichskörper (44) axial spielfrei miteinander verbunden sind.

2. Spannmodul (26) nach Anspruch 1, **dadurch gekennzeichnet, dass** der Ausgleichskörper (44) derart beweglich am Grundkörper (42) angeordnet ist, dass eine Mittellängsachse (45) des Ausgleichskörpers (44) relativ zu einer Mittellängsachse (40) des Grundkörpers (42), insbesondere parallel verschiebbar ist.

3. Spannmodul (26) nach Anspruch 1 oder 2, **dadurch gekennzeichnet, dass** der Grundkörper (42) konzentrisch zu einer Mittellängsachse (40) des Spannmoduls im Spannmodul (26) geführt ist.

4. Spannmodul (26) nach wenigstens einem der vorhergehenden Ansprüche, **dadurch gekennzeichnet, dass** das wenigstens eine Verriegelungselement (64) eine Kontaktfläche (70) zum Spannen eines Spannbolzens (12, 16, 18, 24) aufweist, die derart ausgebildet ist, dass ein Spannbolzen (12, 16, 18, 24) beim Verlagern des wenigstens einen Verriegelungselements (64) in die Verriegelungslage nicht in die Spannaufnahme eingezogen wird.

5. Spannmodul (26) nach Anspruch 4, **dadurch gekennzeichnet, dass** die Kontaktfläche (70) des wenigstens einen Verriegelungselements (64) derart ausgebildet ist, dass die Kontaktfläche (70) gegen einen zylindrischen Abschnitt (72) des Spannbolzens wirkt.

6. Spannmodul (26) nach wenigstens einem der vorhergehenden Ansprüche, **dadurch gekennzeichnet, dass** das Spannmodul (26) einen Zylinderraum (36) aufweist, in dem der Kolben (38) angeordnet ist, wobei der Grundkörper (42) und der Zylinderraum (36) einen mit Druckluft oder mit einem Hydraulikmedium beaufschlagbaren Druckraum (53) begrenzen.

7. Spannmodul (26) nach wenigstens einem der vorhergehenden Ansprüche, **dadurch gekennzeichnet, dass** die Mechanik (66) so ausgebildet ist, dass sie eine Axialbewegung des Ausgleichskörpers (44) in eine Radialbewegung des wenigstens einen Verriegelungselements (64) umsetzt.

8. Spannmodul (26) nach wenigstens einem der vorhergehenden Ansprüche, **dadurch gekennzeichnet, dass** die Mechanik (66) eine Kulissenführung oder ein Keilhakengetriebe ist.

9. Spannmodul (26) nach wenigstens einem der vorhergehenden Ansprüche, **dadurch gekennzeichnet, dass** ein radial und axial flexibles Dichtelement (74) vorgesehen ist, das an einer Außenseite der Spannaufnahme angeordnet ist.

10. Spannsystem (28), insbesondere Nullpunktspannsystem, mit wenigstens einem oder mehreren, jeweils wenigstens ein verlagerbares Verriegelungselement aufweisenden Nullpunktspannmodulen (22) und mit wenigstens zwei oder mehreren an einem Werkstück (10) anordenbaren, in die Nullpunktspannmodule einführbaren Spannbolzen (12, 16, 18, 24), wobei die Spannbolzen (12, 16, 18, 24) in den Nullpunktspannmodulen (22) mittels der Verriegelungselemente in einer Verriegelungslage verriegelbar sind, **dadurch gekennzeichnet, dass** wenigstens ein Spannmodul (26) nach wenigstens einem der vorhergehenden Ansprüche vorgesehen ist.

11. Spannsystem (28) nach Anspruch 10, **dadurch gekennzeichnet, dass** die Spannbolzen (12, 16, 18, 24) einheitlich ausgebildet sind.

## Claims

1. Clamping module (26), in particular a compensation module, comprising a clamp receptacle for receiving a clamping pin (12, 14, 16, 18, 24) of a clamping system, in particular a zero-point clamping system (28), and comprising at least one locking element (64) that can be displaced, in the radial direction, into a locking position such that, in a radially inner position, said element acts against a clamping pin (12, 14, 16, 18, 24) arranged in the clamp receptacle, a displaceable piston (38) being provided that is motion-coupled to the locking element (64) by means of a mechanism (66) such that displacement of the piston (38) causes radial displacement of the locking element (64), the piston (38) comprising a main body (42) and a compensation body (44) which comprises the mechanism (66) for motion-coupling and which is arranged on the main body (42) so as to be movable in the radial direction such that the at least one locking element (64) clamps the clamping pin (12, 16, 18, 24) in the locking position in a radially unconstrained manner in the clamp receptacle, **characterized in that** the main body (42) and the compensation body (44) are interconnected in a bayonet-like manner such that the main body (42) and the compensation body (44) are interconnected in an axially backlash-free manner.

2. Clamping module (26) according to claim 1, **characterized in that** the compensation body (44) is movably arranged on the main body (42) such that a central longitudinal axis (45) of the compensation body (44) can be moved relative to a central longitudinal axis (40) of the main body (42), in particular in parallel therewith.

3. Clamping module (26) according to claim 1 or claim 2, **characterized in that** the main body (42) is guided in the clamping module (26) concentrically to a central longitudinal axis (40) of the clamping module.

4. Clamping module (26) according to at least one of the preceding claims, **characterized in that** at least one locking element (64) comprises a contact surface (70) for clamping a clamping pin (12, 16, 18, 24), which contact surface is formed such that a clamping pin (12, 16, 18, 24) is not pulled into the clamp receptacle when the at least one locking element (64) is displaced into the locking position.

5. Clamping module (26) according to claim 4, **characterized in that** the contact surface (70) of the at least one locking element (64) is formed such that the contact surface (70) acts against a cylindrical portion (72) of the clamping pin.

6. Clamping module (26) according to at least one of the preceding claims, **characterized in that** the clamping module (26) comprises a cylinder chamber (36) in which the piston (38) is arranged, the main body (42) and the cylinder chamber (36) defining a pressure chamber (53) to which compressed air or a hydraulic medium can be supplied.

7. Clamping module (26) according to at least one of the preceding claims, **characterized in that** the mechanism (66) is designed so as to convert an axial movement of the compensation body (44) into a radial movement of the at least one locking element (64).

8. Clamping module (26) according to at least one of the preceding claims, **characterized in that** the mechanism (66) is a slotted guide system or a wedge hook transmission.

9. Clamping module (26) according to at least one of the preceding claims, **characterized in that** a radially and axially flexible sealing element (74) is provided, which is arranged on an outer surface of the clamp receptacle.

10. Clamping system (28), in particular a zero-point clamping system, comprising at least one or more zero-point clamping modules (22) that each have at least one displaceable locking element, and comprising at least two or more clamping pins (12, 16, 18, 24) that can be arranged on the workpiece (10) and inserted into the zero-point clamping modules, it being possible to lock the clamping pins (12, 16, 18, 24) in the zero-point clamping modules (22) in a locking position by means of the locking elements, **characterized in that** at least one clamping module (26) according to at least one of the preceding claims is provided.

11. Clamping system (28) according to claim 10, **characterized in that** the clamping pins (12, 16, 18, 24) are homogeneous.

## Revendications

1. Module de serrage (26), en particulier module de compensation, avec un logement de serrage pour recevoir un boulon de serrage (12, 14, 16, 18, 24) d'un système de serrage, en particulier d'un système de serrage de zéro (28), et avec au moins un élément de verrouillage (64) qui est déplaçable dans la direction radiale dans une position de verrouillage de telle sorte qu'il agit dans une position radialement interne contre un boulon de serrage (12, 14, 16, 18, 24) agencé dans le logement de serrage, dans lequel un piston (38) déplaçable est prévu qui est couplé en mouvement audit élément de verrouillage (64) par le biais d'une mécanique (66) de telle sorte qu'un déplacement du piston (38) provoque un déplacement radial de l'élément de verrouillage (64), dans lequel ledit piston (38) comprend un corps de base (42) et un corps de compensation (44) qui présente la mécanique (66) pour le couplage en mouvement et qui est agencé de manière mobile dans la direction radiale sur le corps de base (42) de telle manière que, dans la position de verrouillage, ledit au moins un élément de verrouillage (64) serre le boulon de serrage (12, 16, 18, 24) sans contrainte radiale dans le logement de serrage, **caractérisé par le fait que** ledit corps de base (42) et ledit corps de compensation (44) sont reliés entre eux à la manière d'une baïonnette de telle sorte que le corps de base (42) et le corps de compensation (44) sont reliés l'un à l'autre de manière à être exempts de jeu axial.

2. Module de serrage (26) selon la revendication 1, **caractérisé par le fait que** le corps de compensation (44) est disposé de manière mobile sur le corps de base (42) de telle sorte qu'un axe longitudinal médian (45) du corps de compensation (44) est déplaçable, en particulier parallèlement, par rapport à un axe longitudinal médian (40) du corps de base (42) .

3. Module de serrage (26) selon la revendication 1 ou 2, **caractérisé par le fait que** le corps de base (42) est guidé de manière concentrique à un axe longitudinal médian (40) du module de serrage dans le module de serrage (26)..

4. Module de serrage (26) selon l'une au moins des revendications précédentes, **caractérisé par le fait que** ledit au moins un élément de verrouillage (64) présente une surface de contact (70) pour serrer un boulon de serrage (12, 16, 18, 24), qui est conçue de telle manière que, lorsque ledit au moins un élément de verrouillage (64) est déplacé dans la position de verrouillage, un boulon de serrage (12, 16, 18, 24) n'est pas rentré dans le logement de serrage.

5. Module de serrage (26) selon la revendication 4, **caractérisé par le fait que** la surface de contact (70) dudit au moins un élément de verrouillage (64) est conçue de telle sorte que la surface de contact (70) agit contre une portion cylindrique (72) du boulon de serrage.

6. Module de serrage (26) selon l'une au moins des revendications précédentes, **caractérisé par le fait que** le module de serrage (26) présente un espace de cylindre (36) dans lequel est disposé le piston (38), le corps de base (42) et l'espace de cylindre (36) limitant un espace de pression (53) qui peut être alimenté en air comprimé ou en un milieu hydraulique .

7. Module de serrage (26) selon l'une au moins des revendications précédentes, **caractérisé par le fait que** la mécanique (66) est conçue de manière à ce qu'elle convertisse un mouvement axial du corps de compensation (44) en un mouvement radial dudit au moins un élément de verrouillage (64).

8. Module de serrage (26) selon l'une au moins des revendications précédentes, **caractérisé par le fait que** ladite mécanique (66) est un guide de coulisse ou une commande à crochet à coin.

9. Module de serrage (26) selon l'une au moins des revendications précédentes, **caractérisé par le fait que** l'on prévoit un élément d'étanchéité (74) qui est flexible radialement et axialement et qui est disposé sur une face extérieure du logement de serrage.

10. Système de serrage (28), en particulier système de serrage de zéro, avec au moins un ou plusieurs modules de serrage de zéro (22) présentant chacun au moins un élément de verrouillage déplaçable, et avec au moins deux ou plusieurs boulons de serrage (12, 16, 18, 24) aptes à être disposés sur une pièce (10) et à être introduits dans les modules de serrage de zéro, dans lequel lesdits boulons de serrage (12, 16, 18, 24) peuvent être verrouillés dans les modules de serrage de zéro (22) au moyen des éléments de verrouillage dans une position de verrouillage, **caractérisé par le fait qu'**au moins un module de serrage (26) selon l'une au moins des revendications précédentes est prévu.

11. Système de serrage (28) selon la revendication 10, **caractérisé par le fait que** les boulons de serrage (12, 16, 18, 24) sont réalisés de manière uniforme.
